# EUROPEAN PATENT APPLICATION

(11) **EP 4 585 916 A1**
(43) Date of publication of application: **16.07.2025**
(21) Application number: 24215306.2
(22) Date of filing: 26.11.2024
(51) Int. Cl.: G01N 29/14, G01N 29/46, B05B 1/00, B05B 15/18, C23C 24/04

(54) **COLD SPRAY DIAGNOSTICS**

(30) Priority: 11.01.2024 US 202418410898
(71) Applicant: Rolls-Royce Corporation, Indianapolis, IN 46225-1103 (US); Rolls-Royce North American Technologies Inc., Indianapolis IN 46241 (US)
(72) Inventor: GOLD, Matthew R., INDIANAPOLIS, 46241 (US); LAGOW, Benjamin W., INDIANAPOLIS, 46225-1103 (US); BLAIR, Taylor K., INDIANAPOLIS, 46225-1103 (US)
(74) Representative: Ström & Gulliksson AB

(57) **Abstract**

An example system includes at least one acoustic sensor configured to generate at least one time-dependent acoustic data signal indicative of an acoustic signal generated by a cold spray system performing a process possessing a plurality of process attributes, and a computing device including an acoustic data signal processing module configured to receive the at least one time-dependent acoustic data signal, and transform the at least one time-dependent acoustic data signal to a frequency-domain spectrum, wherein each process attribute of the plurality of process attributes is associated with at least one respective frequency band, and a correlation module configured to determine a process attribute of the plurality of process attributes by identifying at least one characteristic of the frequency-domain spectrum.

## Description

### TECHNICAL FIELD

The disclosure relates to cold spray systems, including cold spray additive manufacturing systems.

### BACKGROUND

Cold spray systems are used in a wide variety of industrial applications to coat targets with spray material to modify or improve the properties of the target. Coatings may include thermal barrier coatings, hard wear coatings, ablative coatings, or the like. Cold spray systems may also be used to deposit material for additive fabrication of structures and components or dimensional restoration. Cold spray systems accelerate particles of material injected in a high velocity gas stream, so that material propelled by the stream contacts a target substrate. Upon impact, the material adheres to the target surface by plastic deformation induced by kinetic energy, resulting in deposition of the material on the target surface.

### SUMMARY

In some examples, the disclosure describes a system including at least one acoustic sensor configured to generate at least one time-dependent acoustic data signal indicative of an acoustic signal. The acoustic signal is generated by a cold spray system performing a process possessing a plurality of process attributes. The system also may include a computing device that includes an acoustic data signal processing module. The acoustic data signal processing module may be configured to receive the at least one time-dependent acoustic data signal, and transform the at least one time-dependent acoustic data signal to a frequency-domain spectrum. Each process attribute of the plurality of process attributes may be associated with at least one respective frequency band. The computing device may additionally include a correlation module configured to determine a process attribute of the plurality of process attributes by identifying at least one characteristic of the frequency-domain spectrum.

In some examples, the disclosure describes a method including receiving, by a computing device, from at least one acoustic sensor, at least one time-dependent acoustic data signal indicative of an acoustic signal generated by a cold spray system performing a process possessing a plurality of process attributes. The method also may include transforming, by the computing device, the at least one time-dependent acoustic data signal to a frequency-domain spectrum. Each process attribute of the plurality of process attributes may be associated with at least one respective frequency band. Further, the method may include determining, by the computing device, a process attribute of the plurality of process attributes by identifying at least one characteristic of the frequency-domain spectrum.

In some examples, the disclosure describes a computer readable storage medium. In this example, the computer readable storage medium includes instructions that, when executed, cause at least one processor to receive, from at least one acoustic sensor, at least one time-dependent acoustic data signal indicative of an acoustic signal. The acoustic signal is generated by a cold spray system performing a process possessing a plurality of process attributes. The computer readable storage medium also may include instructions that, when executed, cause at least one processor to transform the at least one time-dependent acoustic data signal to a frequency-domain spectrum. Each process attribute of the plurality of process attributes may be associated with at least one respective frequency band. The computer readable storage medium additionally may include instructions that, when executed, cause at least one processor to determine a process attribute of the plurality of process attributes by identifying at least one characteristic of the frequency-domain spectrum.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a conceptual block diagram illustrating an example cold spray system including a computing device for analyzing an acoustic signal generated by a cold spray system performing a process possessing a plurality of process attributes to determine a process attribute of the plurality of process attributes.
FIG. 2 is a conceptual block diagram illustrating an example of a computing device for analyzing an acoustic signal generated by a cold spray system performing a process possessing a plurality of process attributes to determine a process attribute of the plurality of process attributes.
FIG. 3 is a flow diagram illustrating an example technique for analyzing an acoustic signal generated by a cold spray system performing a process possessing a plurality of process attributes to determine a process attribute of the plurality of process attributes.

### DETAILED DESCRIPTION

The disclosure describes systems and techniques for analyzing an acoustic signal generated by a cold spray process to determine one or more attributes of the cold spray process, and for controlling a cold spray system. A cold spray system may include at least one component, such as a spray gun, a powder feed system, a gas feed system, or like.

During a cold spray process, the spray gun receives spray material introduced into a carrier gas flowing at a high velocity. The carrier gas accelerates the spray material, and directs the accelerated spray material toward a spray target using the carrier gas. The spray material contacts the spray target at a high material velocity to provide a deposit of the spray material on the spray target. The spray material adheres to the target by plastic deformation or adiabatic heating induced by impact at the high material velocity. The deposit may form a coating on the spray target, for example, in a coating process. Alternatively, the deposit may form a structure on the spray target, for example, in an additive manufacturing process.

For example, cold spraying for additively fabricating relatively large structures and deposits may exhibit variations in process stability over relatively extended periods of time that may be required for fabrication. Additionally, extended cold spray operations may lead to nozzle wear or nozzle blockage or clogging. Because sound is emitted from the nozzle due to high velocity gases in course of cold spraying, there are changes in the acoustic signal generated as the nozzle geometries are changed. Using the acoustic emission for diagnostics may facilitate reducing or avoiding deviation of a cold spray process beyond acceptable range, and thus reduce or avoid defective deposits or structures produced by cold spraying. Monitoring acoustic emissions may also be used to generate an alert, which may prompt an operator to change a component (for example, a nozzle) prior to failure, and continue or resume manufacturing while substantially conforming to process and product specifications.

In some examples, the quality of the deposit on the spray target may depend on process attributes including, for instance, the spray material composition and flow rate; the carrier gas composition, temperature, and flow rate; the spray target composition and shape; the condition of the at least one component (e.g., the spray gun); and the like. Unsatisfactory deposit characteristics may result from variances in process attributes, including process parameters, component wear, or both.

In some examples, the at least one component (e.g., the spray gun) includes a nozzle, for example, a converging-diverging nozzle. In course of spraying, material may build up on internal surfaces of the nozzle. Internal surfaces of the nozzle may also be deformed or worn, for example, by contact with material. Such changes to the nozzle influence the flow of material and carrier gas through the nozzle, and ultimately, affect the deposit characteristics. Increasing changes may cause deposit characteristics to deviate from nominal specifications or tolerances. Thus, the spray gun may need maintenance or replacement after a period of operation. An additive manufacturing process based on cold spraying to fabricate a structure may include a relatively prolonged spray duration. Changes to the nozzle in course of fabricating the structure may affect the quality of the structure in course of deposition. Thus, a need may arise to suspend the additive manufacturing process, perform maintenance or replacement of the spray gun, and resume the additive manufacturing process.

During operation of the cold spray system, the at least one component may generate an acoustic signal (e.g., sound), which may be associated with cold spray parameters, a condition of the at least one component, or both. The cold spray system may include at least one acoustic sensor configured to generate at least one time-dependent acoustic data signal representative of the acoustic signal generated by the at least one component. The system also may include a computing device configured to analyze the at least one time-dependent acoustic data signal.

The time-dependent acoustic data signal may be rich in information, and may include data representative of acoustic signals generated by one or more component of the cold spray system. The acoustic signals may also be representative of process parameters or variations in process parameters. For example, the acoustic signal generated by a spray gun may depend upon process attributes including, for example, geometry of a nozzle, including wear of the spray gun nozzle, material deposit within the nozzle or at ends of the nozzle, powder flow rate, powder flow pulsing, gas flow rate, powder composition, or the like. In this way, the computing device may analyze the time-dependent acoustic data signal to determine whether process attributes associated with the spray gun are within a nominal or expected range, or if the process attributes are varying compared to an expected value. The computing device may also control at least one process attribute, or at least one component, or the cold spray system, to maintain or adjust the process attribute to be within the nominal or expected range, or within a threshold amount of the expected value.

In some examples, the cold spray system may include a plurality of acoustic sensors, and respective acoustic sensors may be positioned near respective components of the cold spray process. In some examples, each acoustic sensor of the plurality of acoustic sensors may generate a respective at least one time-dependent acoustic data signal. Because of the different positions of the respective acoustic sensors, the computing device may analyze the respective time-dependent acoustic data signals to determine information related to respective components of the cold spray system. For example, each respective time-dependent acoustic data signal may be associated with the respective component to which the respective acoustic sensor is near. Alternatively or additionally, the computing device may utilize the intensity of respective frequency components of at least one time-dependent acoustic data signal to determine, e.g., based on distance, to which component the sound may be attributed. In this way, the computing device may analyze the time-dependent acoustic data signal or time-dependent acoustic data signals to determine process attributes for a plurality of components of the cold spray system.

By utilizing the at least one time-dependent acoustic data signal, the cold spray system described herein may perform real-time or near real-time analysis or control of operation of at least one component of the cold spray system. Further, monitoring a time-dependent acoustic data signal representative of one or more outputs of the cold spray system may provide a more accurate indication of process attributes of the cold spray system, e.g., compared to monitoring inputs to the cold spray system using a flow meter, flow controller, amp meter, or voltmeter. Further, in some examples, flow meters, flow controllers, amp meters, and voltmeters may require calibration, and falling out of calibration may reduce the accuracy of the feedback provided by out-of-calibration flow meters, flow controllers, amp meters, and voltmeters. The cold spray system may, based on the at least one time-dependent acoustic data signal, perform automated control of operation of at least one component, for example, by causing operation of at least one component (or of another component, or of the system as a whole) to initiate, continue, suspend, terminate, or resume, or by modifying at least one process parameter associated with, affected by, or affecting, the at least one component, another component, or the system as a whole.

The computing device may control the cold spray system by adjusting at least one process attribute associated with at least one component of the cold spray system based on the at least one time-dependent acoustic data signal. In some examples, the computing device may adjust the process attribute by selecting at least one component based on the process attribute and determining a control signal for the component based on the comparison of the spectrum of the acoustic data signal with a baseline spectrum. The computing device may send the control signal to the selected at least one system component to adjust the process attribute. For example, the computing device may determine a control signal that controls the at least one system component to cause the process attribute to remain or be adjusted to be within a nominal or expected range, or within a threshold amount of the expected value.

Thus, example systems and techniques according to the disclosure may be used to adjust a process parameter of the cold spray system, based on an acoustic signal generated by the cold spray system. By utilizing the at least one time-dependent acoustic data signal, the cold spray system described herein may perform real-time or near real-time control of operation of at least one component of the cold spray system. Systems and techniques according to the disclosure provide near real-time feedback to an operator or a process controller for controlling components of cold spray systems to adjust process attributes, or to shut down the components or the system, as appropriate.

In additive manufacturing processes, by utilizing the at least one time-dependent acoustic data signal, the cold spray system described herein may initiate, continue, suspend, terminate, or resume an additive manufacturing process run in response to the time-dependent acoustic data signal. For example, the cold spray system may continue the additive manufacturing process run in response to determining that the at least one component (e.g., the spray gun) conforms to specifications, may suspend the run in response to determining that the at least one component deviates from the specifications to allow maintenance or replacement, and may resume the run in response to determine that the at least one component (after maintenance or replacement) conforms to specifications. Additionally, if the cold spray system determines, in response to the time-dependent acoustic data signal, that the at least one component does not conform to specifications even after maintenance or replacement, the cold spray system may suspend the run again, and generate an alert indicative of the need for further maintenance or replacement. For example, further maintenance or replacement may be required if the at least one component was insufficiently cleaned, or replaced with an incorrect or worn replacement component.

The term "cold spray" does not preclude heating of the carrier gas or the material introduced in the carrier gas. For example, the carrier gas may be heated to increase the velocity of the carrier gas, and of the material carried by the carrier gas. For example, the carrier gas may include a supersonic jet carrying the material. In turn, the material introduced into the carrier gas may also be heated to some extent by thermal transfer from the carrier gas. However, the operating temperatures in cold spray systems are relatively lower compared to operating temperatures associated with thermal spray systems and processes. For example, cold spray systems and techniques may not require melting of material introduced into the carrier gas for deposition of the material onto the target. Further, while the carrier gas may be initially heated, the gas may cool in course of expanding through the diverging section of a converging-diverging nozzle, for example, in the spray gun. Thus, in cold spray systems and techniques, plastic deformation of material at temperatures relatively lower than operating temperatures associated with thermal spray systems and processes may be sufficient for depositing material, and material may not be substantially melted or molten.

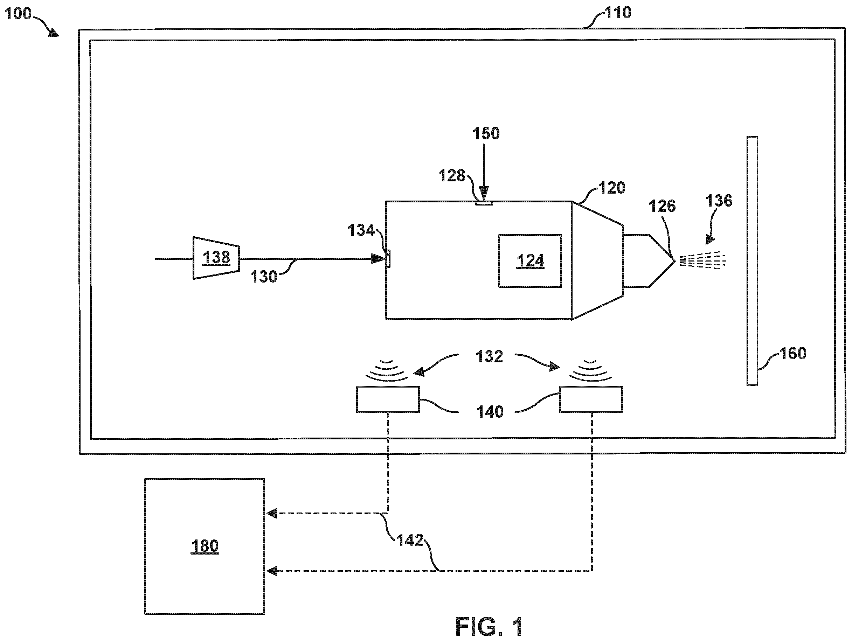

FIG. 1 is a block diagram illustrating an example cold spray system 100. In some examples, cold spray system 100 includes components such as an enclosure 110, a cold spray gun 120, at least one acoustic sensor 140, and a computing device 180.

Enclosure 110 may enclose some components of cold spray system 100, including, for example, cold spray gun 120 and at least one acoustic sensor 140. In some examples, enclosure 110 substantially completely surrounds cold spray gun 120 and at least one acoustic sensor 140 and encloses an atmosphere. The atmosphere may include, for example, air, an inert atmosphere, a vacuum, or the like. In some examples, the atmosphere may be selected based on the type (e.g., composition) of coating being applied using cold spray system 100. Enclosure 110 may also enclose a spray target 160.

While cold spray system 100 includes enclosure 110, in other examples, cold spray system 100 may not include any enclosure. For example, one, more than one, or all components of cold spray system 100 may be free of an enclosure. In some examples, spray target 160 is free of an enclosure. Additionally, or alternatively, cold spray gun 120 may be free of an enclosure.

Spray target 160 includes a substrate on which material is to be deposited using cold spray system 100. In some examples, spray target 160 may include, for example, a substrate on which a bond coat, a primer coat, a hard coat, a wear-resistant coating, a thermal barrier coating, an environmental barrier coating, or the like is to be deposited. Thus, cold spray system 100 may be used to form a coating on spray target 160. In other examples, spray target 160 may include, for example, a substrate on which a structure or a component is additively fabricated, for example, a build plate or a build substrate to receive an additively manufactured structure or component. Thus, cold spray system 100 may be used to additively manufacture the structure or component. Spray target 160 may include a substrate or body of any regular or irregular shape, geometry or configuration. In some examples, spray target 160 may include a metal, an alloy, a plastic, a glass, a ceramic, or any material compatible with the spray material, or combinations thereof. Spray target 160, or the structure or component deposited on spray target 160, may be a component used in any one or more mechanical systems, including, for example, a high temperature mechanical system such as a gas turbine engine.

Cold spray gun 120 is coupled to a gas feed line 130 via gas inlet port 134, is coupled to a spray material feed line 150 via material inlet port 128, and includes or is coupled to an energy source 124. Gas feed line 130 provides a gas flow to gas inlet port 134 of cold spray gun 120. The gas flow includes a carrier gas for accelerating and carrying introduced particles of material. Gas feed line 130 may be coupled to a gas source (not shown) that is external to enclosure 110. The carrier gas may include one or more of helium, nitrogen, or air, or any other suitable gas or gaseous mixture.

Cold spray gun 120 also includes a material inlet port 128, which is coupled to spray material feed line 150. Material feed line 150 may be coupled to a material source (not shown) that is located external to enclosure 110. Spray material may be fed through material feed line 150 in powder form, and may mix with gas from gas feed line 130 within cold spray gun 120. The composition of the spray material may be based upon the composition of the deposit to be formed on spray target 160, and may include, for example, a metal, an alloy, a ceramic, or the like.

Cold spray gun 120 may also include energy source 124. Energy source 124 provides energy to heat the carrier gas to increase the velocity of the carrier gas to a target gas velocity. Energy source 124 may include an electric heating element, for example, a resistive heating element, or any other suitable mode of heat transfer. In some examples, energy source 124 is located outside cold spray gun 120, for example, in, along, adjacent, or about gas feed line 130. In some examples, cold spray system 100 does not include an energy source, and carrier gas in gas feed line 130 may be preheated external to cold spray system 100.

Cold spray system 100 may perform a high-pressure cold spray (HPCS) or a low-pressure cold spray (LPCS) process. Cold spray system 100 may include a compressor 138 to pressurize the carrier gas to an HPCS operating pressure or LPCS operating pressure. For example, the HPCS operating pressure may be in a range from 1 to 5 MPa (145 to 725 psi), and the LPCS operating pressure may be in a range from 0.5 to 1.0 MPa (75 to 140 psi). In an HPCS process, spray material is typically introduced into cold spray gun 120 before a "throat" of a converging-diverging nozzle. In an LPCS process, spray material is typically introduced after the throat. Thus, material inlet port 128 may be positioned in cold spray gun 120 before or after the throat, depending on the type of process to be performed by cold spray system 120.

As shown in FIG. 1, an exit flowstream 136 exits outlet 126 of cold spray gun 120. In some examples, outlet 126 includes a spray gun nozzle. Exit flowstream 136 may include at spray material carried by a carrier gas. Outlet 126 may be configured and positioned to direct the at high-velocity spray material at spray target 160.

Cold spray system 100 includes at least one acoustic sensor 140. In some examples, as shown in FIG. 1, cold spray system 100 includes a plurality of acoustic sensors, such as at least two acoustic sensors 140. Each of the at least one acoustic sensor 140 is configured to sense acoustic signals 132 (e.g., sound). Acoustic signals 132 may be generated by one or more components or processes of cold spray system 100. The at least one acoustic sensor 140 may include, for example, an acoustic sensing element such as a microphone or a sound-to-electric transducer or electromagnetic, capacitive, or piezoelectric elements that generate an electrical signal in response to incident sound waves.

The at least one acoustic sensor 140 may be configured to sense acoustic signals 132 with a predetermined wavelength or wavelength range. In some examples, the at least one acoustic sensor 140 may be configured to sense acoustic signals 132 that may or may not be detectable by human hearing, including infrasound and ultrasound. In some examples, acoustic signals 132 may include frequencies below about 20Hz, from about 20 Hz to about 20 kHz, from about 20 kHz to about 2MHz, higher than about 2 MHz, or combinations thereof. Each acoustic sensor of the at least one acoustic sensor 140 is configured to generate a respective time-dependent acoustic data signal of at least one time-dependent acoustic data signal 142 based on the sensed acoustic signal 132 and communicate at least one time-dependent acoustic data signal 142 to computing device 180. In some examples, at least one time-dependent acoustic data signal 142 includes a digital data signal, and at least one acoustic sensor 140 includes an analog-to-digital converter. In other examples, at least one time-dependent acoustic data signal 142 may include an analog signal. In some examples, at least one acoustic sensor 140 may include an amplifier to amplify the signal sensed by at least one acoustic sensor 140 and produce the at least one time-dependent acoustic data signal 142. At least one acoustic sensor 140 may transmit at least one time-dependent acoustic data signal 142 using electrical signals, Bluetooth, Wi-Fi, radio, or any other suitable transmission pathway.

Computing device 180 may be configured to control operation of one or more components of cold spray system 100 automatically or under control of a user. For example, computing device 180 may be configured to control operation of cold spray gun 120, gas feed line 130 (and the source of gas to gas feed line 130), material feed line 150 (and the source of material to material feed line 150), at least one acoustic sensor 140, and the like. Computing device 180 also may be configured to receive at least one time-dependent acoustic data signal 142 from at least one acoustic sensor 140 and analyze the at least one time-dependent acoustic data signal 142 to determine one or more process attributes of cold spray system 100.

In examples in which cold spray system 100 is configured to perform an additive manufacturing process, computing device 180 may be further configured to control one or more of a relative position or relative orientation of spray gun 120, of nozzle outlet 126, or of exit flowstream 136 with respect to spray target 160. For example, computing device 180 may be coupled to one or more motors configured to cause one or both of spray gun 120 or spray target 160 to move (for example, translate and/or rotate) or orient with respect to each other. Thus, computing device 180 may, based on a predetermined model of a structure to be deposited on spray target, change a relative position or orientation of spray gun 120 relative to spray target 160 to deposit portions of the structure on spray target 160, for example, along one or more continuous or discrete paths or patterns, to successively deposit layers or portions of material to form the structure from the material deposited on spray target 160.

During a cold spray process, cold spray system 100 performs at least one process, such as depositing a coating of spray material on spray target 160, or depositing a structure including the spray material in a pattern based on a model on spray target on spray target 160. Cold spray system 100 and the cold spray process performed by cold spray system 100 possess a plurality of process attributes. The process attributes may include process parameters, component wear, and the like. Process parameters may deviate from designed or nominal values. Computing device 180 may be configured to compare the process deviations to the nominal or designed process parameters. For example, process parameters may include at least one of a temperature, a pressure, a mass flow rate, a volumetric flow rate, a molecular flow rate, a molar flow rate, a composition or a concentration, of a flowstream flowing through cold spray system 100, for instance, of gas flowing through gas feed line 130, or of exit flowstream 136, or of material flowing through material feed line 150. In some examples, the process deviations may include at least one of material feed fluctuation, for instance, powder pulsing, flow blockage (for e.g., of one or more of gas feed line 130, exit flowstream 136, material feed line 150), gas leakage, or a process deviation resulting from incompatibility (for e.g., wrong type or configuration of a component, for instance, using a nozzle that is unsuitable for a high viscosity flow) or wear or blockage of the at least one component. In some examples, wear or blockage of the at least one component may include wear or blockage of cold spray gun 120, including wear or blockage of cold spray outlet 126 or of an interior channel or a nozzle of cold spray gun 120, wear of energy source 124, and wear or blockage of material inlet port 128, for instance, powder port wear or blockage.

As described above, components of cold spray system 100 and processes performed by cold spray system 100 generate acoustic signals 132 during the cold spray process. For example, acoustic signals 132 may originate from cold spray gun 120 (e.g., energy source 124, cold spray outlet 126, material inlet port 128, or gas inlet port 134), gas feed line 130, exit flowstream 136, spray material feed line 150, impact of the spray material against spray target 160, or any other component associated with cold spray system 100, such as a spray material hopper, a spray material feeder, a gun or part manipulating robot or machine, an air handling system, a dust filtering system, or the like.

Acoustic signals 132 generated by the components depend on process attributes, and may change in response to process attributes changing. For example, acoustic signals 132 produced by gas feed line 130 may change in response to any one or more of the temperature, pressure, flowrate, viscosity, composition, or concentration of the flowstream in gas feed line 130 changing. Similarly, acoustic signals 132 produced by material feed line 150 may change in response to any one or more of the temperature, pressure, flowrate, viscosity, composition, or concentration of the carrier gas of the spray material in material feed line 150 changing. Acoustic signals 132 produced by exit flowstream 136 may change in response to, for example, any one or more of the temperature, pressure, flowrate, viscosity, composition, or concentration of exit flowstream 136 changing. Acoustic signals 132 produced by spray target 160 may change in response to any one or more of the temperature, pressure, flowrate, viscosity, composition, or concentration of the spray material impacting the spray target changing, or the composition, bulk or surface geometry of spray target 160 changing, or even in response to a change in the thickness or geometry of the deposit of spray material on spray target 160. Further, in an additive manufacturing process, acoustic signals 132 produced by spray target 160 may change as successive layers of a structure are deposited on spray target 160, increasing a maximum thickness, a maximum width, or some other geometric aspect of the structure. Acoustic signals 132 generated by gas feed port 134, material feed port 128, spray outlet 126 may change as the respective component wears. In some examples, acoustic signals 132 generated by a worn or blocked spray outlet 126, for instance, a worn or blocked nozzle, differs from acoustic signals 132 generated by a new (e.g., previously unused) nozzle.

In some examples, respective process attributes may be associated with one or more respective frequency bands within acoustic signals 132. For example, a peak frequency in the tens of kilohertz (kHz; e.g., between about 13 kHz and about 15 kHz) may be associated with spray outlet 126, such as a spray nozzle, and may change as the spray outlet 126 mechanically wears. Other process attributes may similarly be associated with respective frequencies or frequency bands, which may change in frequency value, intensity, or the like, based on the value of the process attribute.

In some examples, acoustic signals 132 may be affected by the portion of the cold spray process which is being performed. For example, acoustic signals 132 generated during an initial startup period by components of cold spray system 100 may differ from acoustic signals 132 generated when cold spray system 100 is performing a spraying process, or acoustic signals 132 generated when cold spray system 100 is being shut down. Hence, computing device 180 may analyze at least one time-dependent acoustic data signal 142 to determine at which portion of the cold spray process cold spray system 100 is, or a user may identify the portion of the cold spray process at which cold spray system 100 is, and computing device 180 may utilize this information when analyzing at least one time-dependent acoustic data signal 142.

Other factors may result in acoustic signals 132 changing. For example, acoustic signals 132 generated by components of cold spray system 100 in a first configuration may differ acoustic signals 132 generated in a second configuration. In some examples, computing device 180 may analyze a respective time-dependent acoustic data signal of at least one time-dependent acoustic data signal 142 to identify the configuration of components of cold spray system 100, or the stage or progress of a process performed by cold spray system 100, or a stage or progress of a subprocess performed by one or more components of cold spray system 100. In some examples, computing device 180 may identify the process stage at which cold spray system 100 is operating by comparing a respective time-dependent acoustic data signal of at least one time-dependent acoustic data signal 142 of cold spray system 100 in the unknown process stage to a time-dependent acoustic data signal from a known configuration or process stage of a cold spray system.

In some examples, at least one acoustic sensor 140 may be configured to enhance detection of one or more acoustic signal of acoustic signals 132 compared to another one or more acoustic signal of acoustic signals 132. For instance, a first acoustic sensor of at least one acoustic sensor 140 may be positioned adjacent to a selected component of cold spray system 100, oriented toward a selected component of cold spray system 100, or the like to enhance detection of a selected acoustic signal of acoustic signals 132 compared to another one or more acoustic signal of acoustic signals 132. For example, a first acoustic sensor of at least one acoustic sensor 140 may be positioned to sense acoustic signals 132 originating from cold spray gun 120 (e.g., material inlet port 128, gas inlet port 134, spray outlet 126), and a second acoustic sensor of at least one acoustic sensor 140 may be positioned to sense acoustic signals 132 originating from material feed line 150. The at least one acoustic sensor 140 may be located near a component or at a zone within the cold spray system 100, or may be oriented towards a component to sense sound from the component, or otherwise more accurately attribute the sound to a source. In an example, at least one acoustic sensor 140 may include multiple acoustic sensors forming an acoustic sensor network that captures sound generated by various components of cold spray system 100.

As described above, computing device 180 may analyze at least one time-dependent acoustic data signal 142 to determine information about one or more process attributes of cold spray system 100, which may include, for example, a component configuration, component wear or blockage, process parameters, or process deviations of cold spray system 100. For example, computing device 180 may be configured to receive the at least one time-dependent acoustic data signal 142, transform the at least one time-dependent acoustic data signal 142 to a frequency-domain spectrum, and determine a process attribute by identifying at least one characteristic of the frequency-domain spectrum. As described above, each of the plurality of process attributes of cold spray system 100 may be associated with at least one respective frequency band. In some examples, computing device 180 may analyze at least one time-dependent acoustic data signal 142 to determine whether process attributes associated with the process performed by cold spray system 100 are within a nominal or expected range, or if the process attributes are varying compared to the nominal or expected range.

In some examples, because of the different positions of at least one acoustic sensor 140, computing device 180 may analyze the at least time-dependent acoustic data signal 132 to determine information related to particular components of cold spray system 100. For example, computing device 180 may utilize the intensity of respective frequency components of at least one time-dependent acoustic data signal 142 to determine a distance from the acoustic sensor from which the at least one time-dependent acoustic data signal 142 was received to the component generating the acoustic signal, and may attribute the acoustic signal to that component. Additionally or alternatively, computing device 180 may utilize data indicative of the position and/or orientation of the acoustic sensor from which the at least one time-dependent acoustic data signal 142 was received relative to a selected component to the acoustic signal to a component. In this way, computing device 180 may analyze the at least one time-dependent acoustic data signal 142 or multiple time-dependent acoustic data signals to determine process attributes for a plurality of components of the cold spray system.

In some examples, computing device 180 may analyze at least one acoustic data signal 142 to identify process attributes, including process parameters, component wear or blockage, or both that may result in unsatisfactory coating characteristics or other undesirable conditions of cold spray system 100. In some examples, by utilizing at least one time-dependent acoustic data signal 142, computing device 180 may perform real-time or near-real-time analysis of the operation of cold spray system 100. For example, monitoring a signal representative of one or more outputs of cold spray system 100 may provide a more accurate indication of process attributes of cold spray system 100, e.g., compared to monitoring inputs to cold spray system 100 using a flow meter, flow controller, amp meter, or voltmeter.

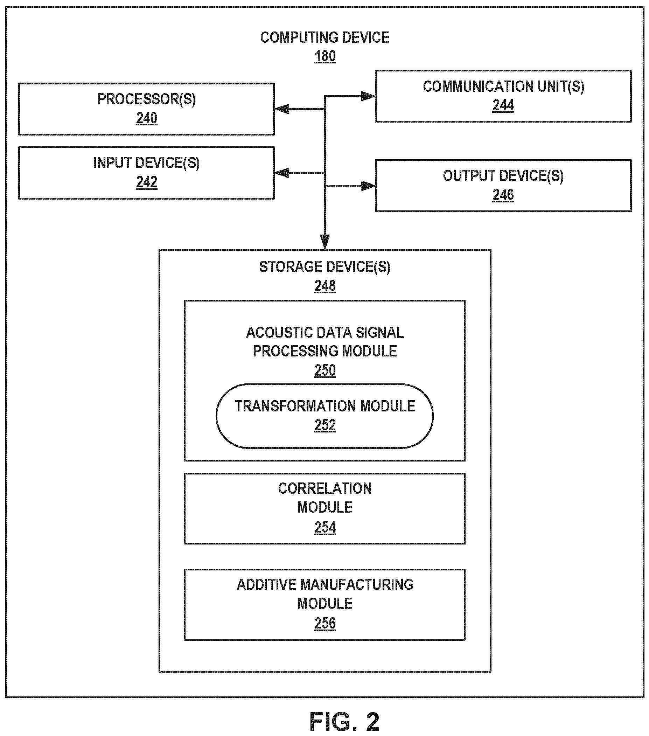

FIG. 2 is a conceptual block diagram illustrating an example of computing device 180 illustrated in FIG. 1. In some examples, computing device 180 may include, for example, a desktop computer, a laptop computer, a workstation, a server, a mainframe, a cloud computing system, or the like. In some examples, computing device 180 controls the operation of system 100, including, for example, cold spray gun 120, energy source 124, gas feed line 130, exit flowstream 136, acoustic sensors 140, spray material feed 150, and spray target 160.

In the example illustrated in FIG. 2, computing device 180 includes one or more processors 240, one or more input devices 242, one or more communication units 244, one or more output devices 246, and one or more storage devices 248. In some examples, one or more storage devices 248 stores acoustic data signal processing module 250, transformation module 252, correlation module 254, or additive manufacturing module 256. In other examples, computing device 180 may include additional components or fewer components than those illustrated in FIG. 2.

One or more processors 240 are configured to implement functionality and/or process instructions for execution within computing device 180. For example, processors 240 may be capable of processing instructions stored by storage device 248. Examples of one or more processors 40 may include, any one or more of a microprocessor, a controller, a digital signal processor (DSP), an application specific integrated circuit (ASIC), a field-programmable gate array (FPGA), or equivalent discrete or integrated logic circuitry.

One or more storage devices 248 may be configured to store information within computing device 180 during operation. Storage devices 248, in some examples, include a computer-readable storage medium or computer-readable storage device. In some examples, storage devices 248 include a temporary memory, meaning that a primary purpose of storage device 248 is not long-term storage. Storage devices 248, in some examples, include a volatile memory, meaning that storage device 248 does not maintain stored contents when power is not provided to storage device 248. Examples of volatile memories include random access memories (RAM), dynamic random access memories (DRAM), static random access memories (SRAM), and other forms of volatile memories known in the art. In some examples, storage devices 248 are used to store program instructions for execution by processors 240. Storage devices 248, in some examples, are used by software or applications running on computing device 180 to temporarily store information during program execution.

In some examples, storage devices 248 may further include one or more storage device 248 configured for longer-term storage of information. In some examples, storage devices 248 include non-volatile storage elements. Examples of such non-volatile storage elements include magnetic hard discs, optical discs, floppy discs, flash memories, or forms of electrically programmable memories (EPROM) or electrically erasable and programmable (EEPROM) memories.

Computing device 180 further includes one or more communication units 244. Computing device 180 may utilize communication units 244 to communicate with external devices (e.g., cold spray gun 120, gas feed line 130, exit flowstream 136, acoustic sensor 140, spray material 150, and spray target 160) via one or more networks, such as one or more wired or wireless networks. Communication unit 244 may include a network interface card, such as an Ethernet card, an optical transceiver, a radio frequency transceiver, or any other type of device that can send and receive information. Other examples of such network interfaces may include WiFi radios or Universal Serial Bus (USB). In some examples, computing device 180 utilizes communication units 244 to wirelessly communicate with an external device such as a server.

Computing device 180 also includes one or more input devices 242. Input devices 242, in some examples, are configured to receive input from a user through tactile, audio, or video sources. Examples of input devices 242 include a mouse, a keyboard, a voice responsive system, video camera, microphone, touchscreen, or any other type of device for detecting a command from a user.

Computing device 180 may further include one or more output devices 246. Output devices 246, in some examples, are configured to provide output to a user using audio or video media. For example, output devices 246 may include a display, a sound card, a video graphics adapter card, or any other type of device for converting a signal into an appropriate form understandable to humans or machines. In some example, computing device 180 outputs a representation of one or more of the at least one time-dependent acoustic data signal 142, of the frequency-domain spectrum, of the at least one characteristic of the frequency-domain spectrum, or of the process attribute that the at least one characteristic is indicative of, via output devices 246.

In some examples, computing device 180 may generate an alert in response to the least one attribute, via output devices 246. For example, computing device 180 may generate auditory signals, such as a beep, an alert tone, or an alerting sound, or visual signals, such as an icon on a display, flashing lights, or a combination of visual and audible signals, to indicate a process attribute variance or a process attribute deviation. In some examples, the alert signal may indicate a particular component in need of maintenance or replacement, for example, spray gun 120, or another component. In some examples, an operator may thus be alerted, and may choose to investigate cold spray system 100. As another example, computing device 180 may generate an alert that is transmitted over a network to another computing device, including a hand-held computing device, for instance, a cellphone. The alert signal may include information about the process attribute, for instance, a process parameter, or a variance in the process parameter, or a process deviation status, or an identification of the process deviation.

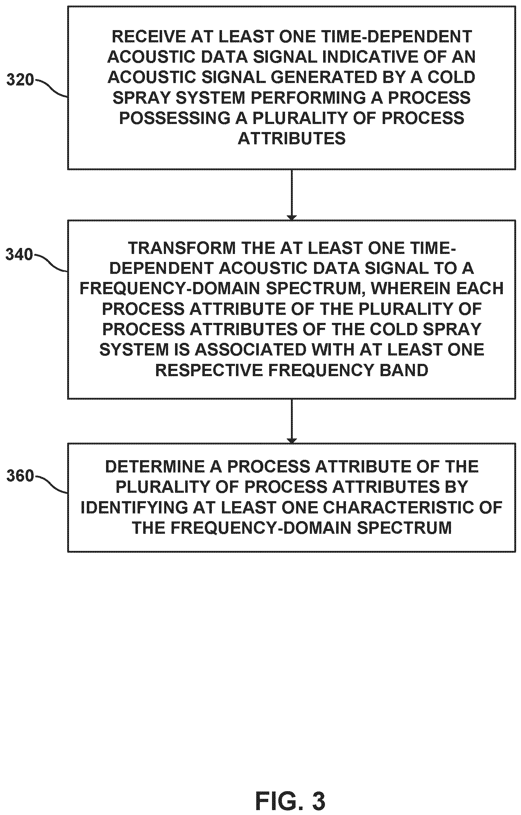

Computing device 180 also may include an acoustic data signal processing module 250 and a correlation module 254. In some examples, acoustic data signal processing module 250 pre-processes or processes at least one time-dependent acoustic data signal 142 to prepare at least one time-dependent acoustic data signal 142 for analysis by correlation module 254, and correlation module 254 analyzes at least one time-dependent acoustic data 142 signal to determine the process attribute. In some examples, acoustic data signal processing module 250 may include a transformation module 252 for transforming at least one time-dependent acoustic data signal 142 from a time-domain spectrum to a frequency-domain spectrum. Functions performed by acoustic data signal processing module 250, transformation module 252 and correlation module 254 are explained below with reference to the example flow diagram illustrated in FIG. 3.

Acoustic data signal processing module 250, transformation module 252, and correlation module 254 may be implemented in various ways. For example, acoustic data signal processing module 250, transformation module 252, and/or correlation module 254 may be implemented as software, such as an executable application or an operating system, or firmware executed by one or more processors 240. In other examples, acoustic data signal processing module 250, transformation module 252, and/or correlation module 254 may be implemented as part of a hardware unit of computing device 180. In some examples, acoustic data signal processing module 250 includes transformation module 252, as shown in FIG. 2. In some examples, transformation module 252 is separate from acoustic data signal processing module 250.

In some examples, the alert signal may indicate a completion of an additive manufacturing fabrication process, for example, a complete formation of a structure deposited on spray target 160. In some examples, the alert signal may indicate a deviation of the structure from a predetermined model, or a disruption or misalignment in the structure, for example, a presence of voids, openings, protrusions, or other features that deviate from the model of the structure. Thus, an operator may investigate cold spray system 100 to inspect and/or remove a partially or completely formed structure, or to initiate a further instance or copy of the completed structure.

In examples in which cold spray system 100 is configured to perform an additive manufacturing process, computing device 180 also may include additive manufacturing module 256. Additive manufacturing module 256 may be configured to, based on a predetermined model of a structure to be fabricated by additive manufacturing, control one or more components of cold spray system 100 to cause the structure to be deposited on spray target 160. For example, manufacturing module 256 may send a control signal to one or more components, or receive a signal from one or more sensors. In some examples, the control signal controls at least one motor configured to cause relative movement (for example, translation or rotation) or orientation between spray gun 120 and spray target 160. Further, the control signal may cause, based on the model, initiation or termination of material being introduction in the carrier gas, thus causing material to be deposited in patterns or along paths on spray target 160 (or on previous layers of deposited material), ultimately forming the structure on spray target 160 based on the model.

Computing device 180 may include additional components that, for clarity, are not shown in FIG. 2. For example, computing device 180 may include a power supply to provide power to the components of computing device 180. Similarly, the components of computing device 180 shown in FIG. 2 may not be necessary in every example of computing device 180.

Examples of cold spray system 100 and computing device 180 are described with reference to FIGS. 1 and 2 above, including examples of at least one acoustic sensor 140 for generating at least one time-dependent acoustic data signal 142 indicative of acoustic signals 132 generated by cold spray system 100. Example techniques for analyzing at least one time-dependent data signals to determine a process attribute of a process performed by cold spray system 100 are described with reference to FIG. 3 below.

FIG. 3 is a flow diagram illustrating an example technique for analyzing an acoustic signal generated by a cold spray system performing a process possessing a plurality of process attributes to determine a process attribute of the plurality of process attributes. In some examples, a computing device, such as computing device 180, may implement the technique of FIG. 3 to analyze the at least one time-dependent signal 142 indicative of acoustic signals 132 generated by cold spray system 100 performing a process possessing a plurality of process attributes, described in various examples with reference to FIG. 1 above, to determine a process attribute of the plurality of process attributes. The technique of FIG. 3 will be described with reference to cold spray system 100 of FIG. 1, and computing device 180 of FIGS. 1 and 2, for purposes of description only. It will be appreciated that the technique of FIG. 3 may be used to analyze at least one acoustic data signal to determine a process attribute of processes performed by other cold spray systems, that other computing devices may implement the technique of FIG. 3, or both.

The technique of FIG. 3 includes receiving, by computing device 180, from at least one acoustic sensor 140, at least one time-dependent acoustic data signal 142 indicative of acoustic signals 132 generated by cold spray system 100 (320). In some examples, at least one time-dependent acoustic data signal 142 may include analog signals, and acoustic data signal processing module 250 of computing device 180 may process at least one acoustic data signal 142 by performing an analog-to-digital conversion. In other examples, the received at least one time-dependent acoustic data signal 142 may include digital signals and acoustic data signal processing module 250 may not perform analog-to-digital conversion of at least one time-dependent acoustic data signal 142. In some examples, acoustic data signal processing module 250 of computing device 180 may filter at least one acoustic data signal 142 through signal processing filters such as band pass filters, high pass filters, low pass filters, comb filters, notch filters, or other filters, for instance, deconvolution filters, or noise filters to filter out undesirable signal components, such as noise, superfluous signal components, such as harmonics, or to reduce or compress the information in at least one acoustic data signal 142.

The technique of FIG. 3 also includes transforming, by transformation module 252 of computing device 180, at least one time-dependent acoustic data signal 142 to a frequency-domain spectrum (340). The frequency-domain spectrum may include intensity or amplitude as a function of frequency. In some examples, transformation module 252 of computing device 180 transforms at least one time-dependent acoustic data signal 142 to a frequency-domain spectrum using at least one of a fast Fourier transform or a discrete Fourier transform. In some examples, transformation module 252 may perform the transformation before, during or after other processing such as filtering described above.

The technique of FIG. 3 further includes determining, by correlation module 254 of computing device 180, a process attribute of the plurality of process attributes by identifying at least one characteristic of the frequency-domain spectrum (360). As described above, in some examples, each process attribute of the plurality of process attributes is associated with at least one respective frequency band in the frequency-domain spectrum. For example, nozzle wear of cold spray gun 120 may be associated with a first frequency band, and gas flow through gas feed line 130 may be associated with a second frequency band. Other examples are also contemplated, for example, those described with respect to FIG. 1. Therefore, correlation module 254 may determine the process attribute based at least in part on the identified at least characteristic of the frequency-domain spectrum according to one or more example techniques described below.

Computing device 180 may identify at least one characteristic of the frequency-domain spectrum using one or more of the example techniques described below. In some examples, correlation module 254 may analyze the entire frequency-domain spectrum to identify at least one characteristic of the frequency-domain spectrum (360). For example, correlation module 254 may compare the entire frequency-domain spectrum with a second frequency-domain spectrum to identify at least one characteristic of the frequency-domain spectrum (360). In some examples, the second frequency-domain spectrum may be a known or reference frequency-domain spectrum, such as sample frequency-domain spectrum obtained from another known cold spray system performing a known cold spray process or a calculated frequency-domain spectrum. In this way, correlation module 254 may compare the entire frequency-domain spectrum to a frequency-domain spectrum representative of expected operation of cold spray system 100.

In other examples, the second frequency-domain spectrum may be a past frequency-domain spectrum obtained from at least one time-dependent acoustic data signal 142 over a past interval of time from cold spray system 100. The second frequency-domain spectrum may include, for example, a past frequency-domain spectrum obtained during the process, so that correlation module 254 compares the frequency-domain spectrum at a present interval of time with the frequency-domain spectrum at a past interval of time to identify the at least one characteristic. In this way, correlation module 254 may identify changes of the frequency-domain spectrum relative to past operation of cold spray system 100 and may determine changes over time of operation of cold spray system 100.

In some examples, correlation module 254 may then determine the process attribute by at least selecting at least one of a representative frequency or a representative intensity of the frequency within the frequency-domain spectrum as the at least one characteristic based on the comparison of the entire frequency-domain spectrum with the known frequency-domain spectrum (360). For example, correlation module 254 may identify at least one frequency for which an intensity has changed between the second frequency-domain spectrum and the frequency-domain spectrum determined based on at least one time-dependent acoustic data signal 142, and may select that frequency as the process attribute or for use in determining the process attribute. In some examples, correlation module 254 may identify a plurality of respective frequencies for which a respective intensity has changed between the second frequency-domain spectrum and the frequency-domain spectrum determined based on at least one time-dependent acoustic data signal 142, and may select each respective frequency as a process attribute or for use in determining a respective process attribute. In this way, in some examples, correlation module 254 may determine a plurality of process attributes for cold spray system 100 based at least in part on at least one time-dependent acoustic data signal 142.

In other examples, instead of analyzing the entire frequency-domain spectrum, correlation module 254 may analyze a selected portion of the frequency-domain spectrum to identify at least one characteristic of the frequency-domain spectrum (360). For example, identifying at least one characteristic of the frequency-domain spectrum (360) may include filtering, by acoustic data signal processing module 250, the at least one time-dependent acoustic data signal 142 to select a frequency band prior to transforming, by transformation module 252, at least one time-dependent acoustic data signal 142 to the frequency-domain spectrum (340), or selecting, by acoustic data signal processing module 250, a frequency band from the frequency-domain spectrum. In some examples, identifying the at least one characteristic of the frequency-domain spectrum (360) may further include analyzing, by correlation module 254, the selected frequency band to identify at least one characteristic of the frequency-domain spectrum (360). In some examples, correlation module 254 may compare the selected frequency band with a second frequency band, which may be analogous to the second frequency-domain spectrum described above. For example, the second frequency band may be a known or reference frequency-domain spectrum or may be a past frequency-domain spectrum obtained from at least one time-dependent acoustic data signal 142.

In some examples, determining the process attribute may include selecting, by correlation module 254, at least one of a frequency or an intensity of the frequency within the selected frequency band as the at least one characteristic based on the comparison of the selected frequency band with the known frequency band (360). For example, correlation module 254 may extract a plurality of intensities from a selected frequency band of the frequency-domain spectrum, each intensity of the plurality of intensities corresponding to a respective frequency of a plurality of frequencies within the selected frequency band. In some examples, correlation module 254 may select at least one of an intensity of the plurality of intensities or the respective frequency of the plurality of frequencies as the at least one characteristic. In some examples, correlation module 254 may identify the maximum intensity of the plurality of intensities and select at least one of the maximum intensity (for instance, peal intensity) or the frequency associated with the maximum intensity (for instance, peak frequency) as the at least one characteristic.

In some examples, after determining the at least one characteristic of the frequency-domain spectrum, correlation module 254 may compare the at least one characteristic with a characteristic value or range of characteristic values to determine the process attribute (360). The at least one characteristic and the known or expected characteristic value or range of characteristic values may relate to aspects of process attributes (e.g., magnitude, variation, or the like), which may be associated with frequency values within a frequency band, may be associated with intensities of one or more frequencies within a frequency band, or both. For example, the magnitude of a process attribute may be related to the magnitude of intensities of at least one frequency within the respective frequency band associated with the process attribute, and changes in the process attribute may result in changes in the respective frequency band associated with the process attribute. In some of these examples, increases or decreases in the magnitude of a process attribute may result in corresponding increases or decreases in intensities of one or more frequencies within the respective frequency band associated with the process attribute. Alternatively or additionally, the occurrence of a phenomenon within cold spray system may result in a change in the peak frequency, peak intensity, or both, exhibited by the respective frequency band associated with the process attribute responsible for the occurrence of the phenomenon. Therefore, correlation module 254 may compare the compare the at least one characteristic with a known or expected characteristic value or range of characteristic values to determine the process attribute.

Correlation module 254 may compare the at least one characteristic with a known or expected characteristic value or range of characteristic values to determine the process attribute using one or more of the following example techniques. In some examples, correlation module 254 may select the known or expected characteristic value or range of characteristic values from a second frequency-domain spectrum, such as a known frequency-domain spectrum obtained from a test or experimental process or a frequency-domain spectrum from a past time interval of the present process. In some examples, the known frequency-domain spectrum may include a frequency-domain spectrum obtained from a cold spray process that resulted in satisfactory coating characteristics. In other examples, the known frequency-domain spectrum may be a reference frequency-domain spectrum that includes expected or nominal frequency content based on expected or nominal process attributes. Thus, comparing the at least one characteristic with known or expected characteristic value or range of characteristic values may allow correlation module 254 to determine the deviation or variation of a process attribute of the present process from the process attribute of a known process.

Comparing the at least one characteristic with a characteristic value or range of characteristic values obtained from the frequency-domain spectrum over a past time interval (360) may allow correlation module 254 to determine the change in the process attribute from the past time interval to the present time interval. In some examples, correlation module 254 may determine an increase or decrease in the intensity of a frequency in a selected frequency band compared to an intensity in the past frequency-domain spectrum as indicative of a respective increase or decrease in the magnitude of a process attribute associated with the selected frequency band.

In some examples, correlation module 254 identifies the at least one characteristic at a first interval of time, and compares it with a known characteristic value that is a value of the at least one characteristic at a second interval of time. In some examples, the first interval of time may be a present or recent interval of time, and the second interval of time may be a past interval of time. In some examples, the first interval of time may be associated with a known system performance, for instance, a known magnitude of a process attribute, and the second interval of time may be associated with an unknown system performance, for instance, an unknown magnitude of a process attribute. In some examples, correlation module 254 identifies the at least one characteristic at the first interval of time, and compares the at least one characteristic with a known or predetermined characteristic value or known or predetermined characteristic value range. In some examples, the at least one characteristic at the first interval of time includes at least one of an average intensity of the frequency-domain spectrum, a peak intensity of the frequency-domain spectrum, a selected frequency of the frequency-domain spectrum, or a frequency associated with a peak intensity of the frequency-domain spectrum and the predetermined characteristic value range includes a range of the corresponding characteristic.

In some examples, the process attribute may include nozzle wear, the at least one characteristic includes a peak frequency. In some such examples, the predetermined characteristic value range includes a range of frequencies greater than 1 kHz, greater than 5 kHz, greater than 10 kHz, or greater than 20 kHz. In some examples, the range of frequencies is less than 50 kHz, less than 25 kHz, less than 20 kHz, less than 10 kHz, or less than 5 kHz. In some examples, the predetermined characteristic value range is from about 1 kHz to about 50 kHz, from about 5 kHz to about 25 kHz, or from about 10 kHz to about 20 kHz. In other examples, the process attribute includes nozzle wear, the at least one characteristic includes a peak intensity. In some such examples, the known intensity value associated with nozzle wear is more than about 10 dB, more than about 20 dB, or more than about 30 dB. In some examples, the known intensity value is less than about 40 dB, less than about 30 dB, or less than about 20 dB. In some examples, the known intensity is about 20 dB, or about 30 dB. In other examples, the process attribute includes nozzle wear, the at least one characteristic includes a peak frequency. In some such examples, the known frequency value associated with nozzle wear is greater than about 1 kHz, greater than about 2 kHz, greater than about 3kHz, or greater than about 4 kHz. In some examples, the known frequency value is less than about 10 kHz, less than about 5 kHz, less than about 3kHz, or less than about 2 kHz. In some examples, the process attribute includes powder pulsing, the at least one characteristic includes a peak frequency within a frequency band of 4 to 7.5 kHz, and the characteristic value range of frequencies greater than about 4.8 kHz is associated with powder pulsing. In some examples, the process attribute includes powder pulsing, the at least one characteristic includes a peak frequency within a frequency band of 7.5 to 15 kHz, and the characteristic value range of frequencies greater than about 9.6 kHz is associated with powder pulsing.

In these ways, correlation module 254 may determine at least one process attribute of the plurality of process attributes. In some examples, cold spray system 100 may perform a process possessing a plurality of process attributes. In some examples, identifying the magnitude of a process attribute may be desirable. Correlation module 254 may determine the process attribute, for instance, a process parameter that may include at least one of a temperature, a pressure, a mass flow rate, a volumetric flow rate, a molecular flow rate, a molar flow rate, a composition or a concentration, of a flowstream flowing through cold spray system 100, for instance, of gas flowing through gas feed line 130, or of exit flowstream 136, or of material flowing through material feed line 150 based at least in part on at least one time-dependent acoustic signal 142.

In some examples, cold spray system 100 may exhibit unsatisfactory performance for an unknown reason that may be related to a process deviation. Computing device 180 may analyze at least one time-dependent acoustic data signal 142 by one or more example techniques described above with reference to FIG. 3 to determine the process deviation. In some examples, the process deviation may include at least one of material feed fluctuation, for instance, powder pulsing; flow blockage (for e.g., of one or more of cold spray gun 120, gas feed line 130, exit flowstream 136, material feed line 150); gas leakage; a process deviation resulting from incompatibility (for e.g., wrong type or configuration of a component, for instance, using a nozzle that is unsuitable for a high viscosity flow); or wear or blockage of the at least one component, which may include at least one of wear or blockage of cold spray gun 120, including wear or blockage of cold spray outlet 126, wear of energy source 124, or wear or blockage of material inlet port 128.

In this way, computing device 180 may perform the examples techniques described above with reference to FIG. 3 to analyze at least one time-dependent acoustic data signal 142 to determine process attributes for a plurality of components of cold spray system 100 performing a process, and determine whether process attributes are within a nominal or expected range, or if the process attributes are varying compared to an expected value.

The techniques described in this disclosure may be implemented, at least in part, in hardware, software, firmware, or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of this disclosure.

Such hardware, software, and firmware may be implemented within the same device or within separate devices to support the various techniques described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware, firmware, or software components. Rather, functionality associated with one or more modules or units may be performed by separate hardware, firmware, or software components, or integrated within common or separate hardware, firmware, or software components.

The techniques described in this disclosure may also be embodied or encoded in a computer system-readable medium, such as a computer system-readable storage medium, containing instructions. Instructions embedded or encoded in a computer system-readable medium, including a computer system-readable storage medium, may cause one or more programmable processors, or other processors, to implement one or more of the techniques described herein, such as when instructions included or encoded in the computer system-readable medium are executed by the one or more processors. Computer system readable storage media may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer system readable media. In some examples, an article of manufacture may comprise one or more computer system-readable storage media.

Various examples have been described. These and other examples are within the scope of the following claims.

## Claims

1. A system comprising:
at least one acoustic sensor configured to generate at least one time-dependent acoustic data signal indicative of an acoustic signal generated by a cold spray system performing a process possessing a plurality of process attributes; and
a computing device comprising:
an acoustic data signal processing module configured to:
receive the at least one time-dependent acoustic data signal; and
transform the at least one time-dependent acoustic data signal to a frequency-domain spectrum, wherein each process attribute of the plurality of process attributes is associated with at least one respective frequency band; and
a correlation module configured to determine a process attribute of the plurality of process attributes by identifying at least one characteristic of the frequency-domain spectrum.

2. The system of claim 1, wherein the process comprises at least one of spraying, electrical arcing, flow shock, powder transport, or mechanical motion.

3. The system of claims 1 or 2, wherein the process attribute of the plurality of process attributes comprises at least one of:
a process parameter comprising at least one of a temperature, a pressure, a mass flow rate, a volumetric flow rate, a molecular flow rate, a molar flow rate, a composition or a concentration, of a flowstream; or
a process deviation status comprising at least one of powder pulsing, material feed fluctuation, flow blockage, gas leakage, or a process deviation resulting from incompatibility, wear, or blockage of a system component.

4. The system of claim 3, wherein the system component comprises at least one of a cold spray gun, a powder port, or a material inlet port.

5. The system of claim 4, wherein the system component comprises a cold spray gun comprising a nozzle, and wherein the at least one time-dependent acoustic data signal is indicative of at least one of nozzle wear, nozzle blockage, or clogging.

6. The system of any one of claims 1 to 5, wherein the at least one time-dependent acoustic data signal is indicative of a quality of a cold spray deposit.

7. The system of any one of claims 1 to 5, wherein the at least one time-dependent acoustic data signal is indicative of at least one of a geometry of a nozzle, wear of a spray gun nozzle, a material deposit within the nozzle or at ends of the nozzle, a powder flow rate, powder flow pulsing, a gas flow rate, or a powder composition.

8. The system of any one of claims 1 to 7, wherein the acoustic data signal processing module is configured to transform the at least one time-dependent acoustic data signal to the frequency-domain spectrum using at least one of a discrete Fourier transform or a fast Fourier transform.

9. The system of any one of claims 1 to 8, wherein the correlation module is configured to determine the process attribute by at least:
extracting a plurality of intensities from a selected frequency band of the frequency-domain spectrum, each intensity of the plurality of intensities corresponding to a respective frequency of a plurality of frequencies within the selected frequency band; and
selecting at least one of an intensity of the plurality of intensities or the respective frequency of the plurality of frequencies as the at least one characteristic.

10. The system of any one of claims 1 to 9, wherein the at least one characteristic comprises at least one of a peak frequency or a peak intensity.

11. The system of any one of claims 1 to 10, wherein the correlation module is further configured to determine the process attribute by at least comparing the at least one characteristic at a first interval of time with the at least one characteristic at a second interval of time.

12. The system of any one of claims 1 to 11, wherein the correlation module is further configured to determine the process attribute by at least comparing the at least one characteristic at a third interval of time with a predetermined characteristic value range.

13. The system of any one of claims 1 to 12, wherein the correlation module is further configured to determine the process attribute by at least comparing the at least one characteristic at a fourth interval of time with a respective known characteristic of a known frequency-domain spectrum.

14. The system of any one of claims 1 to 13, wherein the computing device further comprises an output device configured to output a representation of at least one of the at least one time-dependent acoustic data signal, the frequency-domain spectrum, the at least one characteristic of the frequency-domain spectrum, or the process attribute of which the at least one characteristic is indicative.

15. A method comprising:
receiving, by a computing device, from at least one acoustic sensor, at least one time-dependent acoustic data signal indicative of an acoustic signal generated by a cold spray system performing a process possessing a plurality of process attributes;
transforming, by the computing device, the at least one time-dependent acoustic data signal to a frequency-domain spectrum, wherein each process attribute of the plurality of process attributes is associated with at least one respective frequency band; and
determining, by the computing device, a process attribute of the plurality of process attributes by identifying at least one characteristic of the frequency-domain spectrum.
